# EUROPÄISCHE PATENTSCHRIFT

(11) **EP 1 728 401 B1**
(45) Veröffentlichungstag und Bekanntmachung des Hinweises auf die Patenterteilung: **07.06.2017**
(21) Anmeldenummer: 05707829.7
(22) Anmeldetag: 24.01.2005
(51) Int. Cl.: H04W 84/08

(54) **VERFAHREN UND VORRICHTUNGEN ZUR BEREITSTELLUNG EINER PUSH-TO-TALK-VERBINDUNG ZWISCHEN MINDESTENS ZWEI ENDGERÄTEN VON TEILNEHMERN INNERHALB EINES KOMMUNIKATIONSNETZES**
METHOD AND DEVICES FOR PROVIDING A PUSH-TO-TALK COMMUNICATION BETWEEN TWO USER TERMINALS IN A COMMUNICATIONS NETWORK
PROCÉDÉ ET DISPOSITIFS POUR ÉTABLIR UNE LIAISON À POUSSOIR DE CONVERSATION ENTRE AU MOINS DEUX TERMINAUX D'ABONNÉS DANS UN RÉSEAU DE COMMUNICATION

(30) Priorität: 24.03.2004 DE 102004014440
(43) Veröffentlichungstag der Anmeldung: 06.12.2006
(73) Patentinhaber: Nokia Solutions and Networks GmbH & Co. KG, 81541 Munich (DE)
(72) Erfinder: LEITGEB, Manfred, A-2440 Gramatneusiedl (AT); MARKOVICS, Peter, A-2225 Zistersdorf (AT); POSTMANN, Erwin, A-7212 Forchtenstein (AT); SWETINA, Jörg, A-1060 Wien (AT)
(74) Vertreter: Weidel, Gottfried
(86) Internationale Anmeldenummer: PCT/EP2005/050284
(87) Internationale Veröffentlichungsnummer: WO 2005/094099

(56) Entgegenhaltungen:
- WO-A-01/37526
- WO-A-02/03581
- US-A1- 2003 016 632
- ANONYMOUS: "Push-To-Talk over Cellular (PoC) User Plane;Transport Protocols; PoC Release 1.0, V 1.1.1" ETSI, Oktober 2003 (2003-10), XP002321969

## Beschreibung

Die Erfindung betrifft ein Verfahren und Vorrichtungen zur Bereitstellung einer Push-to-Talk-Verbindung zwischen mindestens zwei Endgeräten von Teilnehmern innerhalb eines Kommunikationsnetzes, insbesondere eines mobilen Kommunikationsnetzes.

Die Erfindung bezieht sich auf eine Kommunikationsform zwischen Telekommunikationsanwendern in einer "walkie-talkie" Form, das sogenannte Push-to-talk, P2T. Hierbei werden GSM Teilnehmer sowie die gegenwärtigen technischen Gegebenheiten berücksichtigt. Einem Teilnehmer soll durch "Drücken" eines "Sprechknopfes" die Kommunikation mit anderen Teilnehmern ermöglicht werden. Die Kommunikation ist zwischen einzelnen Personen oder innerhalb einer Gruppe von Personen möglich.

Bisher gibt es in der GSM Technologie lediglich Sprachverbindungen zur Person-zu-Person-Kommunikation bzw. Konferenzschaltungen. Dabei werden Telekommunikationsverbindungen für die Dauer der Verbindung belegt und jeder Teilnehmer kann gleichzeitig reden und hören. Eine "walkie-talkie" Form der Kommunikation ist nicht bekannt. Die einzige ähnliche Kommunikationsform laut dem GSM Standard ist unter dem Begriff "Advanced Speech Call Items" bekannt, wobei diese allerdings auf definierte kleine geographische Bereiche eingeschränkt sind und vorrangig auf die Zwecke von "Behörden" Rücksicht nehmen. Das Dokument WO 01/37526 A (QUALCOMM INCORPORATED) 25. Mai 2001 (2001-05-25), offenbart ein Verfahren zur Bereitstellung einer Push-to-Talk-Verbindung zwischen mindestens zwei Endgeräten von Teilnehmern innerhalb eines Kommunikationsnetzes. Die Aufgabe der Erfindung besteht darin, eine Push-to-Talk-Verbindung zwischen mindestens zwei Endgeräten von Teilnehmern innerhalb eines Kommunikationsnetzes unter Verwendung von leitungsvermittelnden (circuit switched) Verbindungen zu ermöglichen.

Die Aufgabe wird durch ein Verfahren sowie durch Vorrichtungen gemäß der unabhängigen Patentansprüche gelöst. Vorteilhafte Weiterbildungen der Erfindung sind in den abhängigen Ansprüchen angegeben.

Ein wesentlicher Aspekt der Erfindung besteht in einem Verfahren zur Bereitstellung einer Push-to-Talk-Verbindung zwischen mindestens zwei Endgeräten von Teilnehmern innerhalb eines Kommunikationsnetzes, insbesondere eines mobilen Kommunikationsnetzes, wobei
a) von einem ersten Endgerät Informationen zum Aufbau einer Push-To-Talk-Verbindung an einen Vermittlungsknoten signalisiert werden,
b) von dem ersten Endgerät eine Nutzverbindung zum Vermittlungsknoten aufgebaut wird und
c) vom Vermittlungsknoten eine Nutzverbindung zu mindestens einem weiteren Endgerät aufgebaut wird wobei durch ein Endgerät die Beendigung der Nutzverbindungen initiiert wird, wobei, - wenn von dem weiteren Endgerät (TE2) die Nutzverbindung zum Vermittlungsknoten, Conference Server, beendet wird, die Teilnehmer an den anderen Endgeräten (TE1, TE3) über die Beendigung der Nurzverbindung informiert werden, und - wenn von dem ersten Endgerät (TE1) die Nutzverbindung zum Vermittlungsknoten, Conference Server, beendet wird, die gesamte Push-To-Talk-Verbindung aufgelöst wird.

Ein weiterer Aspekt der Erfindung besteht in Vorrichtungen mit Mitteln zur Durchführung des oben genannten Verfahrens, insbesondere eines Vermittlungsknotens.

Vorzugsweise wird zur Signalisierung der Informationen zum Aufbau einer Push-to-Talk-Verbindung das USSD (Unstructured Supplementary Service Data) Protokoll verwendet.

Es ist denkbar, dass die oben genannten Schritte a) und b) miteinander vertauscht ausgeführt werden, wobei dann zur Signalisierung vorzugsweise das UUS (User-to-User Signaling) Protokoll verwendet wird.

Die Erfindung berücksichtigt den heutigen Stand der weit verbreiteten GSM Technology und setzt dabei insbesondere auf die GSM Möglichkeiten der "circuit switched" Verbindung.

Diese Technik existiert seit der Einführung von GSM und wird von ca. 1 Milliarde GSM Teilnehmern weltweit benutzt. Heute gewöhnlich verwendete Mobilfunkgeräte beherrschen eine sog. "SIM Tool Kit" Technology. Dabei ist es möglich, neue Anwendungen über die GSM Luftschnittstelle auf ein GSM Terminal zu laden und bereits am Terminal befindliche Anwendungen zu konfigurieren.

Als erstes muss ein "P2T-client" auf ein GSM Terminal geladen werden. Dieser P2T-client bietet dem Anwender zusätzliche Menüoptionen am Terminal, um die P2T Lösung zu nutzen, typischerweise einen "softkey" zum Steuern der Verbindung und Möglichkeiten zur Verwaltung von anderen P2T Teilnehmern. Der Aufbau einer P2T Verbindung erfolgt dadurch, dass der Teilnehmer das P2T Verbindungsziel auf seinen P2T client auswählt. Dabei ist es unerheblich, ob ein oder mehrere Verbindungsziele selektiert werden.

Nach Auswahl der Verbindungsziele am P2T client, sendet dieser eine USSD (Unstructured Supplementary Service Data) Nachricht mit dem (oder den) Verbindungsziel (en) zum Netzwerk. Die USSD Nachricht wird am HLR aufgelöst und an einen Vermittlungsknoten, vorzugsweise an einen P2T Conference Server weitergereicht. Am P2T Conference Server wird die Nachricht analysiert und quittiert. Durch den Erhalt der USSD Nachricht am P2T Conference Server werden präventiv Ressourcen für die P2T Verbindung belegt. Die Quittung wird zum P2T client retourniert. Automatisch wird jetzt eine herkömmliche CS-Verbindung (mit vordefiniertem Ziel = P2T Conference Server) vom P2T client aufgebaut. Das vordefinierte Ziel ist am P2T client vom Betreiber einstellbar.

Nach Empfang der CS Verbindung am P2T Conference Server wird oder werden Verbindungen zu den einzelnen Verbindungszielen (welcher von der vorhergehenden USSD Nachricht analysiert wurden) aufgebaut. Dabei handelt es sich wiederum um herkömmliche CS Verbindungen.

Alternativ kann nach Auswahl der Verbindungsziele am P2T client eine herkömmliche CS-Verbindung (mit vordefiniertem Ziel = P2T Conference Server) vom P2T client aufgebaut werden. [das vordefinierte Ziel ist am P2T client vom Betreiber einstellbar]. Im Zuge dieses Verbindungsaufbaues wird dann mittels des User-to-User Signalling Service 1, die vorher ausgewählten Verbindungsziele dem P2T Conference Server mitgeteilt. Nach Empfang der CS Verbindung am P2T Conference Server werden Verbindungen zu den einzelnen Verbindungszielen (welcher aus dem UUS Zusatz im Verbindungsaufbau analysiert wird) aufgebaut. Dabei handelt es sich wiederum um herkömmliche CS Verbindungen.

Jeder einzelne gerufene Teilnehmer erhält einen eingehenden Anruf, wobei der P2T client dem gerufenen Teilnehmer bereits die Tatsache einer "P2T Einladung" anzeigt. Diese ist deshalb wünschenswert, um P2T Einladungen von normalen eingehenden CS Verbindungen zu unterscheiden. Als Merkmal zur Unterscheidung analysiert der P2T client die "calling line identity", handelt es sich dabei um die bekannte P2T Conference Server Identity, weiß der P2T client, dass es sich um eine P2T Einladung handelt.

Der eingeladene Teilnehmer nimmt die Einladung an, ignoriert diese oder lehnt ab. Alle weiteren Teilnehmer werden auf die gleiche Art und Weise "eingeladen". Nimmt ein Eingeladener die Einladung an, so wird diese quittiert und die CS Verbindung zum P2T Conference Server durchgeschalten und der Eingeladene hört sofort die Kommunikation.

Zu Beginn der P2T Kommunikation wird lediglich die Sprache des Einladenden über den P2T Conference Server verteilt und von allen Eingeladenen gehört. Jedoch steht es jedem P2T Teilnehmer frei eine Anforderung zur Sprachberechtigung zu stellen. Diese Anforderungen werden am P2T Conference Server empfangen und bearbeitet.

Zu jedem Zeitpunkt der P2T Kommunikation ist nur jeweils einem einzigen Teilnehmer erlaubt, zu sprechen bzw. wird der Sprachstrom eines Teilnehmers an alle anderen Teilnehmer verteilt. Beendet der sprechende Teilnehmer seinen Sprachfluss, durch "Loslassen" des Sprechknopfes, wird dieser Vorgang durch eine USSD Nachricht bzw. durch eine UUS Service 2 Nachricht mit entsprechenden Inhalt zum P2T Conference Server geschickt. Fordert ein Teilnehmer eine Sprechberechtigung an, so schickt der P2T client eine USSD Nachricht bzw. UUS Service 2 Nachricht mit entsprechendem Inhalt zum P2T Conference Server. Bei jedem Wechsel der Sprechberechtigung werden alle Teilnehmer informiert. Löst ein Teilnehmer seine Verbindung zum P2T Conference Server aus, werden alle Teilnehmer informiert. Löst der ursprünglich einladende Teilnehmer seine Verbindung zum P2T Conference Server aus, wird die gesamte P2T Kommunikation aufgelöst.

Im folgenden werden die Aufgaben des P2T client und des Conference Servers beschrieben.

Aufgaben des P2T client:
Beim Verbindungsaufbau (outgoing call):
   - Sendet alternativ
      o Liste der Teilnehmer
      o Nummer der P2T Konferenz
         per USSD bzw. per UUS Service 1 an den (fix eingestellten) Conference Server.
   - Call setup zum Conference Server.
Beim Verbindungsaufbau (incoming call):
   - Erkennt anhand der CLI des Conference Servers, dass es sich um eine P2T Verbindung handelt und schaltet Menüführung auf P2T um.
   - Zeigt P2T relevante eingehende USSD bzw. UUS Service 1 Meldungen an.
   - Zeigt andere eingehende Rufe an (und legt diese auf hold).
Während der P2T Verbindung:
   - Sendet Anforderung zur Sprechberechtigung an den Conference Server.
   - Empfängt Sprechberechtigungs- und andere Nachrichten (z.B. neu zugeschaltete Teilnehmer) per USSD bzw. per UUS Service 2 vom Conference Server.
Aufgaben des Conference Servers:
   - Empfängt USSD bzw. UUS des initiierenden Teilnehmers mit
      o der Liste der anderen einzuladenden Teilnehmer oder
      o Nummer der P2T Konferenz.
   - Wählt diese anderen Teilnehmer an. Dabei werden P2T relevante Informationen (z.B. Teilnehmerliste, Nummer der P2T Konferenz...) per USSD bzw. per UUS mitgesandt.
   - Schaltet nur den uplink-Sprachkanal desjenigen durch, der Sprechberechtigung hat.
   - Signalisiert Sprechberechtigung und andere P2T Nachrichten (z.B. Einsteigen und Verlassen der Teilnehmer der P2T Konferenz) per USSD bzw. per UUS an alle Teilnehmer.
   - Löst P2T Konferenz aus, wenn initiierender Teilnehmer die Konferenz verlässt.

Weitere Vorteile der Erfindung ergeben sich aus den nachstehend beschriebenen, anhand einer Zeichnung erläuterten Ausführungsformen.

Die Zeichnung zeigt:
Figur 1 eine schematisch dargestellte typische Netzkonfiguration, bei der das USSD Protokoll zur Anwendung kommt und
Figur 2 eine schematisch dargestellte typische Netzkonfiguration, bei der das UUS Protokoll zur Anwendung kommt.

In beiden Figuren sind die Netzelemente identisch benannt: TE für ein Terminal (Endgerät), BTS für eine Basisstation, BSC für einen Basisstationscontroler, SAT Server für einen SIM Application Toolkit Server, HLR für ein Heimatregister, Conference Server für den Vermittlungsknoten, im Beispiel ein Konferenz-Server, MSC für ein Mobile Switching Center. Die Nummern in den Kreisen bezeichnen die Schritte des erfindungsgemäßen Verfahrens.

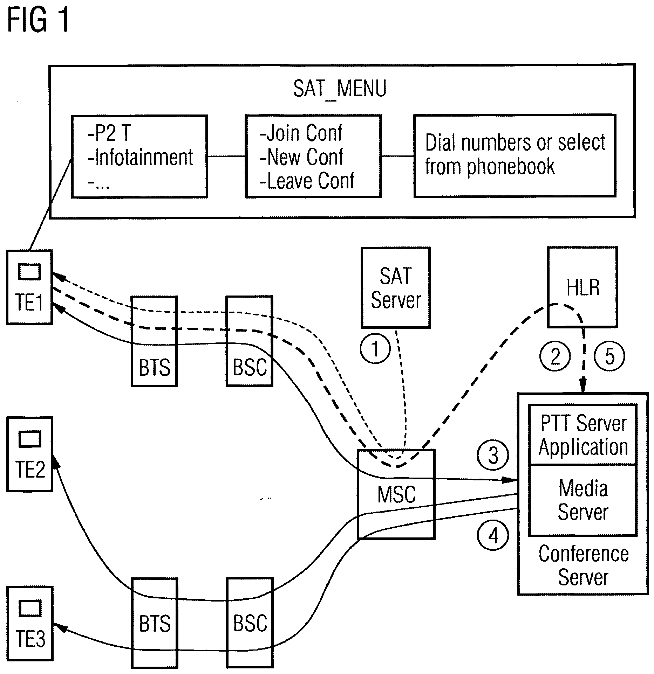

In der Figur 1 werden folgende Verfahrensschritte gezeigt:
1. Laden der P2T Client Applikation auf das Terminal TE1, mittels "SIM Application Toolkit" (SAT) Technologie.
2. Mittels USSD werden dem P2T Conference Server alle notwendigen Informationen zum Aufbau der P2T Verbindung(en) mit einem oder mehreren Teilnehmern TE2, TE3 signalisiert.
3. Nachdem der P2T Conference Server die USSD Nachricht quittiert hat, wird eine Sprachverbindung dort hin aufgebaut.
4. Der Server baut nun Sprachverbindung(en) zu den gewünschten Teilnehmern TE2, TE3 auf.
5. Das Initiatorterminal TE1 der P2T Kommunikation beendet mittels USSD die Session.

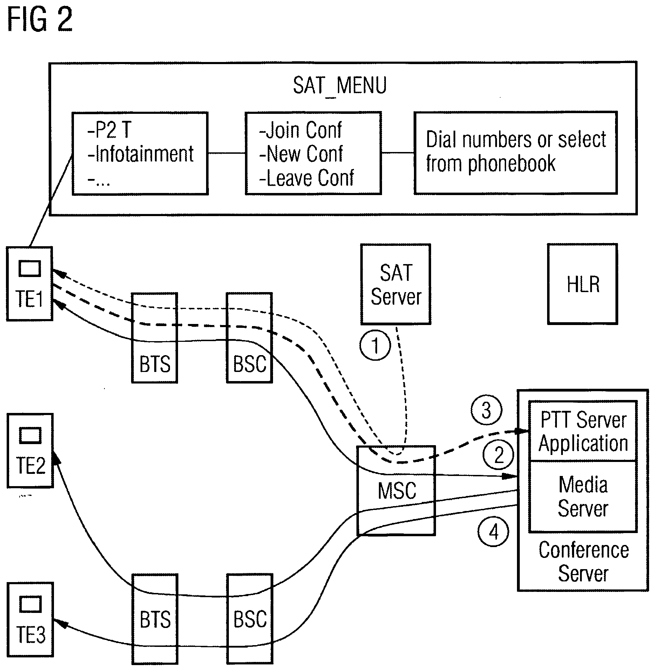

In der Figur 2 werden folgende Verfahrensschritte gezeigt:
1. Laden der P2T Client Applikation auf das Terminal TE1, mittels "SIM Application Toolkit" (SAT) Technologie.
2. Der Initiator der P2T Session baut eine Sprachverbindung zum P2T Conference Server auf.
3. Mittels UUS werden dem P2T Conference Server alle notwendigen Informationen zum Aufbau der P2T Verbindung(en) mit einem oder mehreren anderen Teilnehmern TE2, TE3 signalisiert.
4. Der P2T Conference Server analysiert die UUS Nachricht und baut eine Sprachverbindung zu den gewünschten Teilnehmer(n) TE2, TE3 auf.

Am Initiatorterminal TE1 der P2T Kommunikation wird die Konferenz durch Auflegen beendet.

## Patentansprüche

1. Verfahren zur Bereitstellung einer Push-to-Talk-Verbindung zwischen mindestens zwei Endgeräten (TE1, TE2, TE3) von Teilnehmern innerhalb eines Kommunikationsnetzes, wobei
a) von einem ersten Endgerät (TE1) Informationen zum Aufbau einer Push-To-Talk-Verbindung an einen Vermittlungsknoten, Conference Server, signalisiert werden,
b) von dem ersten Endgerät (TE1) eine Nutzverbindung zum Vermittlungsknoten, Conference Server, aufgebaut wird und
c) vom Vermittlungsknoten (Conference Server) eine Nutzverbindung zu mindestens einem weiteren Endgerät (TE2, TE3) aufgebaut wird,
**dadurch gekennzeichnet, dass**
durch ein Endgerät (TE1, TE2, TE3) die Beendigung der Nutzverbindungen initiiert wird, wobei,
- wenn von dem weiteren Endgerät (TE2) die Nutzverbindung zum Vermittlungsknoten, Conference Server, beendet wird, die Teilnehmer an den anderen Endgeräten (TE1, TE3) über die Beendigung der Nutzverbindung informiert werden, und
- wenn von dem ersten Endgerät (TE1) die Nutzverbindung zum Vermittlungsknoten, Conference Server beendet wird, die gesamte Push-To-Talk-Verbindung aufgelöst wird.

2. Verfahren nach Anspruch 1, **dadurch gekennzeichnet, dass** die aufgebauten Nutzverbindungen Sprachverbindungen sind.

3. Verfahren nach Anspruch 1 oder 2, **dadurch gekennzeichnet, dass** das Kommunikationsnetz ein mobiles Kommunikationsnetz ist.

4. Verfahren nach einem der vorhergehenden Ansprüche, **dadurch gekennzeichnet, dass** mindestens ein Endgerät (TE1, TE2, TE3) durch ein mobiles Endgerät repräsentiert wird.

5. Verfahren nach einem der vorhergehenden Ansprüche, **dadurch gekennzeichnet, dass** die Informationen mittels USSD signalisiert werden.

6. Verfahren nach einem der vorhergehenden Ansprüche, **dadurch gekennzeichnet, dass** in Anspruch 1 die Schritte a) und b) miteinander vertauscht ausgeführt werden.

7. Verfahren nach Anspruch 6, **dadurch gekennzeichnet, dass** die Informationen mittels UUS signalisiert werden.

8. Verfahren nach einem der vorhergehenden Ansprüche, **dadurch gekennzeichnet, dass** der Vermittlungsknoten (Conference Server) den Empfang der signalisierten Informationen quittiert.

9. Verfahren nach einem der vorhergehenden Ansprüche, **dadurch gekennzeichnet, dass** auf das die Push-to-Talk-Verbindung initiierende Endgerät (TE1) vor der Initiierung eine Anwendungssoftware geladen wird.

10. Vermittlungsknoten, Conference Server, welcher derart eingerichtet ist, dass in Verbindung mit einem ersten Endgerät (TE1) das Verfahren nach einem der Ansprüche 1 bis 9 durchführbar ist, der Vermittlungsknoten, Conference Server, aufweisend Mittel zum Empfang von signalisierten Informationen und Mittel zum Aufbau einer Nutzverbindung zu einem weiteren Endgerät (TE2, TE3).

11. Vermittlungsknoten, Conference Server, nach Anspruch 13, aufweisend Mittel zum Quittieren von empfangenen signalisierten Informationen.

12. Vermittlungsknoten, Conference Server, nach Anspruch 13 oder 14, aufweisend Mittel zum Steuern der bereitgestellten Push-to-Talk-Verbindung.

13. Vermittlungsknoten, Conference Server, nach einem der Ansprüche 13, 14 oder 15, **dadurch gekennzeichnet, dass** die Mittel zum Steuern zur Verwendung von USSD oder UUS ausgebildet sind.

## Claims

1. Method for providing a push-to-talk connection between at least two terminals (TE1, TE2, TE3) of subscribers inside a communication network,
a) a first terminal (TE1) signalling information for setting up a push-to-talk connection to a switching node, conference server,
b) the first terminal (TE1) setting up a useful connection to the switching node, conference server,
c) the switching node (conference server) setting up a useful connection to at least one further terminal (TE2, TE3),
**characterized in that**
a terminal (TE1, TE2, TE3) initiates the termination of the useful connections, in which case
- if the further terminal (TE2) terminates the useful connection to the switching node, conference server, the subscribers at the other terminals (TE1, TE3) are informed of the termination of the useful connection, and
- if the first terminal (TE1) terminates the useful connection to the switching node, conference server, the entire push-to-talk connection is terminated.

2. Method according to Claim 1, **characterized in that** the useful connections which have been set up are voice connections.

3. Method according to Claim 1 or 2, **characterized in that** the communication network is a mobile communication network.

4. Method according to one of the preceding claims, **characterized in that** at least one terminal (TE1, TE2, TE3) is represented by a mobile terminal.

5. Method according to one of the preceding claims, **characterized in that** the information is signalled by means of USSD.

6. Method according to one of the preceding claims, **characterized in that** steps a) and b) are carried out in Claim 1 in a manner swapped with one another.

7. Method according to Claim 6, **characterized in that** the information is signalled by means of UUS.

8. Method according to one of the preceding claims, **characterized in that** the switching node (conference server) acknowledges the reception of the signalled information.

9. Method according to one of the preceding claims, **characterized in that** application software is loaded onto the terminal (TE1) initiating the push-to-talk connection before initiation.

10. Switching node, conference server, which is set up in such a manner that the method according to one of Claims 1 to 9 can be carried out in conjunction with a first terminal (TE1), the switching node, conference server, having means for receiving signalled information and means for setting up a useful connection to a further terminal (TE2, TE3).

11. Switching node, conference server, according to Claim 10, having means for acknowledging received signalled information.

12. Switching node, conference server, according to Claim 10 or 11, having means for controlling the push-to-talk connection provided.

13. Switching node, conference server, according to one of Claims 10, 11 and 12, **characterized in that** the control means are designed to use USSD or UUS.

## Revendications

1. Procédé pour établir une liaison à poussoir de conversation entre au moins deux terminaux d'abonnés (TE1, TE2, TE3) dans un réseau de communication,
a) un premier terminal (TE1) signalant des informations pour l'établissement d'une liaison à poussoir de conversation à un noeud de commutation, Conference Server ;
b) le premier terminal (TE1) établissant une liaison utile vers le noeud de commutation, Conference Server, et
c) le noeud de commutation (Conference Server) établissant une liaison utile vers au moins un autre terminal (TE2, TE3),
**caractérisé en ce que**
un terminal (TE1, TE2, TE3) initialise la fin des liaisons utiles,
- les abonnés situés aux autres terminaux (TE1, TE3), lorsque l'autre terminal (TE2) termine la liaison utile vers le noeud de commutation, Conference Server, étant informés de la fin de la liaison utile et
- l'ensemble de la liaison à poussoir de conversation étant défaite lorsque le premier terminal (TE1) termine la liaison utile vers le noeud de commutation, Conference Server.

2. Procédé selon la revendication 1, **caractérisé en ce que** les liaisons utiles établies sont des liaisons vocales.

3. Procédé selon la revendication 1 ou 2, **caractérisé en ce que** le réseau de communication est un réseau de communication mobile.

4. Procédé selon l'une des revendications précédentes, **caractérisé en ce qu'**au moins un terminal (TE1, TE2, TE3) est représenté par un terminal mobile.

5. Procédé selon l'une des revendications précédentes, **caractérisé en ce que** les informations sont signalées par USSD.

6. Procédé selon l'une des revendications précédentes, **caractérisé en ce que**, à la revendication 1, les étapes a) et b) sont interverties.

7. Procédé selon la revendication 6, **caractérisé en ce que** les informations sont signalées par UUS.

8. Procédé selon l'une des revendications précédentes, **caractérisé en ce que** le noeud de commutation (Conference Server) confirme la réception des informations signalées.

9. Procédé selon l'une des revendications précédentes, **caractérisé en ce qu'**un logiciel d'application est chargé sur le terminal (TE1) qui initialise la liaison à poussoir de conversation.

10. Noeud de commutation, Conference Server, qui est configuré de telle sorte que le procédé selon l'une des revendications 1 à 9 peut être exécuté en lien avec un premier terminal (TE1), le noeud de commutation, Conference Server, comportant des moyens de réception d'informations signalées et des moyens pour établir une liaison utile vers un autre terminal (TE2, TE3).

11. Noeud de commutation, Conference Server, selon la revendication 13, comportant des moyens pour confirmer des informations signalées reçues.

12. Noeud de commutation, Conference Server, selon la revendication 13 ou 14, comportant des moyens pour commander la liaison à poussoir de conversation mise à disposition.

13. Noeud de commutation, Conference Server, selon l'une des revendications 13, 14 ou 15, **caractérisé en ce que** les moyens pour commander sont conçus pour usage USSD ou UUS.
